# EUROPEAN PATENT SPECIFICATION

(11) **EP 1 679 705 B1**
(45) Date of publication and mention of the grant of the patent: **02.01.2008**
(21) Application number: 06100007.1
(22) Date of filing: 02.01.2006
(51) Int. Cl.: G11B 19/12, G11B 27/10

(54) **Method and device for scanning the contents of a storage medium**
Verfahren und Vorrichtung zum Scannen des Inhalts eines Speichermediums
Procédé et dispositif de balayage du contenu d'un support de stockage

(30) Priority: 10.01.2005 EP 05300013
(43) Date of publication of application: 12.07.2006
(73) Proprietor: Thomson Licensing, 92100 Boulogne-Billancourt (FR)
(72) Inventor: Tan, Beng Eng, 600240 Singapore (SG); Lee, Guan Swee, 529236 Singapore (SG); Tan, Su Mei, 649925 Singapore (SG); Auyong, Boon Eng, 640212 Singapore (SG); Ong, Wei Khar, 120709 Singapore (SG); Low, Kok Seng, 151057 Singapore (SG)
(74) Representative: Rittner, Karsten

(56) References cited:
- US-A1- 2002 031 071
- US-B1- 6 215 743

## Description

### Field of the invention

This invention relates to a method and a device for scanning the contents of a storage medium.

### Background

When a data carrier like CD-ROM or flash memory medium containing e.g. MP3, JPEG or other files is inserted into a playback device, the device often has to obtain structural information about the data carrier, e.g. for displaying a menu listing the files. For this purpose, the device scans through the medium, or rather the mediums content index or table of contents (TOC). For CD-ROM the expected maximum number of files is 8000, however the user interface may only show a few files at a time, usually about 10. For this scanning, two methods described in the following are known.

The first known method is "Immediate scanning": Files (i.e. TOC entries) are scanned only if necessary, i.e. when the user selects the respective sub menu or navigates inside this sub menu. The scanning result is immediately used. The major drawback of this method is the slow response during page change.

The second known method is "Pre-scanning". The file system or TOC is scanned and memorized directly after insertion of the medium, e.g. optical disk or memory card. An example given in US6215743 uses different data compression rates for different files, where the individual compression rate information is stored in the TOC. The TOC is reproduced and stored in a memory after the disc is loaded. The drawback is that a large memory space is needed if the number of files is high, particularly when taking into account that in future the increasing capacity of e.g. DVD-ROM or flash memory will increase the maximum possible number of files. Scanning time will be long in case of huge data sets, thus the user will need to wait pretty long after insertion of a removable storage medium, before being able to see and/or access the menu listing of the files.

Currently, the second method is used in most applications that support e.g. CD-ROM or memory card, whose size is normally less than 256 Megabytes (MB).

In view of the drawbacks of the known methods as well as to cater for the constantly increasing media capacity, and thus longer content indices, new concepts to the existing scanning scheme are required.

### Summary of the Invention

It is an objective of the present invention to reduce the time that is required to obtain relevant structural information from a storage medium, in particular relevant content index information, e.g. the time from a request until a menu listing of files and/or directories stored on a storage medium can be displayed on a user interface (UI).

In principle, the present invention comprises detecting the medium type, and dynamically deciding whether to use a first or a second media-scanning algorithm, based on information obtained during the medium detection and player resource information. This information may particularly include number of files and/or directories on current directory level and available buffering space or display capacity respectively, but also total number of files and/or directories on the medium, type of file system on the medium, total medium capacity, used medium capacity, and others. A scanning method selector decides which scanning method should be used.

Further, one aspect of the invention is the usage of a partial scanning method. This method incorporates scanning only a part of the structural information on the medium upon the insertion of the medium into a device, and not to scan the entire file system or TOC on the medium initially. The method includes usage of a controller that decides how much file information to scan at an initial first pass, and when to perform re-scanning for one or more further scanning passes.

In particular, the inventive method for scanning a storage medium comprises the steps of receiving a request for structural information regarding said storage medium, such as a content index, determining at least the type of medium and type of file system on the medium, retrieving from said storage medium structural information indicating the structure and/or type of data items stored on the medium, such as files and/or directories, determining the amount of buffer space that is available for buffering the retrieved information, combining the retrieved and the determined values to determine a scanning type value, selecting, depending on the determined scanning type value, one of a plurality of scanning methods for scanning the storage medium or content index of said storage medium, wherein at least a first scanning method comprises scanning only a part of the storage medium or content index of said medium, and scanning the storage medium or content index of said medium according to the selected scanning method, wherein structural information is retrieved. The determination of the scanning type value may be based on predefined (or dynamically defined) rules. Further, upon selection of the first scanning method the scanning may be automatically stopped when structural information for a defined maximum number of data items is retrieved.

A device that utilizes the method is disclosed in claim 10.

According to the invention, a device for scanning the contents or content index of a storage medium comprises means for receiving a request for structural information regarding said storage medium, e.g. user interface controller or interface to another processor, means for determining at least the type of medium and type of file system on the medium, means for retrieving from said storage medium structural information indicating the structure and/or type of data items stored on the medium, e.g. drive with pick-up means, means for determining the amount of buffer space that is available for buffering the retrieved information, e.g. processor, means for combining the retrieved and the determined values to determine a scanning type value, means for selecting, depending on the determined scanning type value, one of a plurality of scanning methods for scanning the storage medium or its content index, and means for scanning the storage medium or its content index according to the selected scanning method, wherein structural information is retrieved. Said determining of the scanning type value may be based on predefined or dynamically defined rules.

According to one aspect of the invention, at least a first scanning method comprises scanning only a part of the storage medium or its content index.

Further, means may be included for automatically stopping the scanning when said first scanning method is selected and structural information for a defined maximum number of data items is retrieved. Moreover, means for dynamically defining said rules may be included, e.g. fuzzy processor.

In one embodiment, the method according to the invention further comprises the step of buffering the retrieved data, wherein the retrieved data are compressed before buffering and decompressed after retrieval from the buffer.

In one embodiment, the defined maximum number of data items to be retrieved from the medium is determined by the maximum number of simultaneously displayable menu items on a user interface, which displays a menu portion using at least a part of the retrieved structural data as menu item data.

In one embodiment, scanning the storage medium for structural data is continued in the background of another application, wherein as much menu item data are retrieved as can immediately be buffered.

In one embodiment, said structural information comprises one or more of: total medium capacity, used and/or unused medium capacity, number of files and/or directories at least on a current hierarchical level, data types of at least a part of said files, track information associated with said files.

In one embodiment, said retrieved and determined values are transformed to fuzzy parameters, and for combining the retrieved and the determined values predefined rules are used for determining a scanning type value based on fuzzy logic procedures.

In one embodiment, the buffer used for buffering the retrieved data portion is divided into buffer partitions or subbuffers. The partial scanning method further comprises the steps of receiving from an application a request for more structural information, retrieving upon said request further structural data from the storage medium, wherein the amount of structural information is the amount of data that can be buffered in one of said subbuffers, overwriting the buffered data in a defined subbuffer with the further structural data while leaving the other subbuffers unchanged, and updating the application that uses the buffered data.

In one embodiment, the following steps are performed after the scanning is automatically stopped: detecting, based on the currently used structural information, which structural information is possible or probable to be used next, retrieving from the storage medium said detected structural information to be possible or probable to be used next, buffering the retrieved information, and selecting upon the next request structural information from said buffered information.

In one embodiment, simultaneous playback mode may be selected for one or more particular data types. Upon such selection of the simultaneous playback mode, the retrieving of structural data or track information for any of that particular data types has priority over retrieving of track information of other data types.

The invention is applicable e.g. to playback devices, or any devices that may retrieve structural information from a storage medium and utilize this information for any further processing. The invention is particularly advantageous if only a fraction of this information per time is used for further processing, e.g. when an electronic display may list only a limited amount of content items at a time, or when buffering space is not sufficient for retrieving all structural information from the medium at once.

Advantageously, the disclosed media-scanning scheme is self-adaptive to various real-time conditions, such as the media capacity, format, currently available buffer space etc. This scheme is applicable for, but not limited to, scanning of e.g. optical discs, USB memory cards or thumb-drives. It can be employed in applications that require the buffering of files and/or directories; it can also be customized for use in applications that require buffering of information retrieved from a removable storage medium.

Advantageous embodiments of the invention are disclosed in the dependent claims, the following description and the figures.

### Brief description of the drawings

Exemplary embodiments of the invention are described with reference to the accompanying drawings, which show in
Fig.1 an overall diagram of the media-scanning method; and
Fig.2 a fuzzy logic controller to decide when to perform re-scan.

### Detailed description of the invention

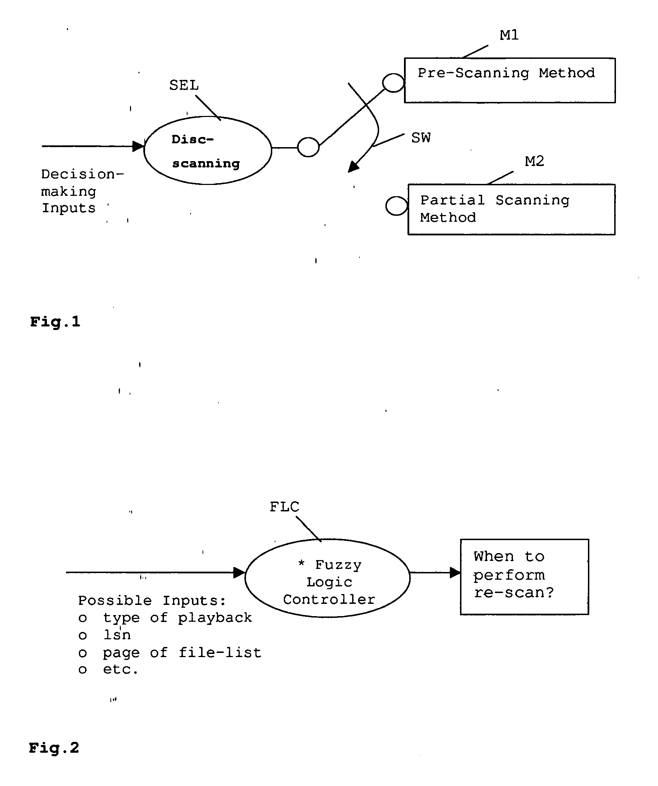

Fig.1 shows an overall diagram of the media-scanning scheme according to the invention.

When structural information about a storage medium is required, e.g. when an optical disc or a memory card is inserted into a playback device or when a menu display is activated, the medium or its content index area, usually a table of contents (TOC), and an indication area is scanned through in order to obtain this information. The structural information comprises usually at least medium type and/or file system type, number of files and/or directories on a top level or on any specified current level, but may also include one or more of total medium capacity, used and/or unused medium capacity, file type, file size, creation date, access date, length of file name or directory name, attached metadata or track information and others.

The invention is based on the recognition of the fact that for different media, depending on their respective usage or occupation as indicated by their structural information, it may be more advantageous to use either one or another scanning algorithm. In particular, the invention comprises obtaining the mentioned structural information from a storage medium, and using that structural information and device specific information as decision-making inputs for dynamically deciding whether to use a first or a second scanning algorithm. A scanning method selector SEL decides which scanning method should be used, and indicates whether a first M1 or a second M2 scanning method shall be used, or initiates the respective selected scanning algorithm. It may physically or logically switch SW between the available scanning methods M1,M2. In principle, there may also be more than two scanning methods available. One of them may be defined to be the default method.

Further, one aspect of the invention is that a partial scanning method may be used. This method does not scan the entire file system of the medium (i.e. its content index) initially, e.g. upon insertion of the medium or upon request for displaying a menu or for generating an index. Instead, this method makes use of a controller to decide how much file information to scan at a first pass, and when to perform re-scanning after the initial scanning pass. It can be implemented using e.g. a microprocessor or the like.

Main advantages of the medium-scanning scheme according to the invention are the following:
First, it uses only little memory. Thus, it is capable of handling huge data sets with only little memory resources. Second, it is quick. For lower-capacity media, its response time is in general relatively close to that of the conventional pre-scanning method. For high-capacity media that contain many files however it is quicker. Therefore, the initial time taken for the player to be ready for selection of a menu title e.g. after insertion of a rather occupied high-capacity medium, is considerably less than that of the conventional pre-scanning method.

The overview diagram in Fig.1 shows a medium-scanning method selector SEL, which controls with a switch SW which of the two (or more) scanning methods is used. The method selector is described in the following.

Upon the insertion/connection of a storage medium to a playback device, the medium type is detected and structural information is obtained from the medium, as mentioned above. The selector SEL may be a relatively simple fuzzy logic controller, which makes use of the possible decision-making inputs, i.e. the mentioned information obtained from the medium and device information, e.g. buffer size available in the playback device, number of displayable lines etc. The selector SEL uses a set of pre-defined rules to determine which of the available medium-scanning methods will be used, in this example pre-scanning method M1 or partial scanning method M2. In one embodiment however, the rules may be dynamically adapted to a current situation, e.g. player capabilities. The selected method will then be used, activated by a kind of logical switch SW. In other embodiments of the invention however the choice may be between more than two medium-scanning methods. For the reasons mentioned above it is particularly advantageous if at least one of the available methods is the mentioned partial scanning method. It is also possible to select between various versions or types of partial scanning methods, e.g. the types listed below.

The rules to determine the most suitable scanning scheme may depend on a few factors that indicate (a) the amount of resources that is needed for the retrieved data, e.g. the memory space required to store the medium information, and (b) in generalized form, the speed at which the information can be retrieved from the medium. Typically, if a medium has a large total capacity and a large used capacity, this indicates that the medium scanning process will be slow and may require a lot of memory. In this case, the partial-scanning method according to the invention will be more efficient, compared to the pre-scanning method. This can be expressed as a rule, like in the following example:

```
   IF (Input_File_System == UDF_TYPE) &&
      (Input_Media_Used_Capacity == A_Lot) &&
      (Input_Buffer_Size == Little)
   THEN (Output_Algo = Partial_Scanning)
```

In this example, the parameters "A_Lot" for the used medium capacity and "Little" for the input buffer size are fuzzy parameters. The used capacity being "A_Lot" may indicate that the medium is not full but a considerable amount of the total capacity of the medium is used, e.g. more than 75% but less than 90%. To obtain these fuzzy parameters, it is possible to combine the read/measured parameters, e.g. read/measure the total medium capacity, read/measure the buffer size and decide whether the buffer size relative to the total medium capacity is "Little" or other, e.g. "Very little", "Medium" or "Large". For the decision e.g. a table can be used indicating limits for the classification. With sufficient rules that describe the scenarios closely, the player will be able to determine the most suitable medium-scanning scheme to be used for different types of loaded media.

It is however possible in a simpler implementation to use fixed parameters that are suitable for the available resources, e.g.

```
  IF (Input_Number_Of_FileItems > 100)
  THEN (Output_Algo = Partial_Scanning)
  ELSE IF (Input_Number_Of_FileItems > 15)
  THEN (Output_Algo = Pre_Scanning)
  ELSE (Output_Algo = Immediate_Scanning)
```

One function that many players support is simultaneous playback (SPB), meaning that a user may e.g. watch a picture slideshow while listening to audio. Thus, the player needs to present both, audio and picture or video data simultaneously. To support SPB of e.g. MP3 and JPEG files, the respective file type, here MP3 or JPEG, must already be detected. If the user tries to select SPB, the player should at least an MP3 file and a JPEG file have already been detected, in order to allow SPB to be detected. Another option is to start scanning immediately for an MP3 file or a JPEG file when the user selects SPB or enables the SPB function.

If the medium has a large capacity and is rather full, it is usually advantageous to use the partial scanning method. However, if the disc contains only a few MP3 or JPEG files and a lot of non-multimedia files, there might still be some delay between consecutive MP3s or JPEGs during playback, due to the fact that it will take much longer to scan for the next MP3 or JPEG to play than if there were less files on the medium. But the delay will in almost all cases be shorter than with known scanning methods.

Generally, a scanning method according to the invention comprises a first scanning algorithm being e.g. a partial scanning algorithm, a different second scanning algorithm and re-scan controlling. In the following, the partial scanning method is described in more detail. Various types of the partial scanning methods may be used.

In a first type of partial scanning algorithm, a device scans the content index for the entire medium and stores as much information as the buffers in the device can store, i.e. the device scans the medium's content index until its buffers are full. Subsequently, the device continues to scan the rest of the content index in order to determine the number of folders/directories and/or files that the medium contains. The device buffers the number of directories and/or files that the medium contains, and inputs this information to the fuzzy logic controller to determine when re-scanning should be done.

In a second type of partial scanning algorithm, the device initially partitions its allocated memory into several buffers, instead of having just one buffer. Upon insertion of the medium, it scans and stores as much information as all the buffers can store. It stops scanning once the buffers are filled up. Re-scanning is performed whenever necessary. When more information is required, e.g. when the user navigates through the menu and more information is needed, not the total buffer needs to be re-filled, but only one or two. Thus, re-scanning can be short and quick.

In a third type of partial scanning algorithm, the device retrieves during initial scanning of the medium's content index only sufficient information for the next processing step, e.g. for a UI to display. If the UI may display only twenty titles simultaneously, then only twenty titles are initially scanned. It may however scan more titles to be prepared for the case that more data are needed, e.g. when the user scrolls up or down in the menu. During playback, or while the menu is displayed or the user navigates through the menu, scanning of the information of the files and/or directories continues in the background. This means that when during playback of e.g. an MP3 audio file the audio data buffers are sufficiently filled with MP3 data and the pick-up is idle for a moment, then the pick-up may continue e.g. to scan the TOC until the menu buffers are full, or until the next ten files/directories are scanned. Background scanning of files/directories should always have the lowest priority, since it should in no way affect the current playback.

In the following, the procedure of dynamically selecting one of the available scanning algorithms is described, as executed by the select block SEL in Fig.1. In order to achieve the design objectives stated above, namely mainly the capability to handle large amounts of data and a quick response time, the third partial scanning method is selected to implement the partial scanning method, and further the track information is compressed before being buffered.

Upon insertion of the medium, the software initiates that it is scanned for sufficient information for the UI to display. When the pick-up or drive is idle, e.g. when no title is selected or when during playback the buffers are full, the background scanning of the information of the files and/or directories starts. The track information of MP3 tracks should always be given higher buffering priority than that of other files, because during playback of MP3 tracks the audio transition should be smooth, i.e. the audio buffers should never run empty. Hence, sufficient information of the MP3 tracks is needed. Furthermore, JPEG decoding may be done in the background since it is not as crucial for track information of JPEG pictures to be stored, compared to that of the MP3 tracks.

One aspect of the invention is the compression of the track information relating to data files. Track information may comprise e.g. title, author, start/end address etc. The track information is retrieved from the medium, compressed before buffering and decompressed after buffering. This compression will enable the information of more files and/or directories to be stored, which reduces the frequency of re-scanning as well. Any known compression algorithm can be used for this purpose. Decompression can be done when the stored information is required.

On top of this, further optimisation of buffer usage is possible by storing only the start address of the track information instead of the track information itself. Information on files and/or directories can in some cases be read from a lookup table on the medium, if available. This helps to decide if disc scanning is necessary or if the lookup table contains sufficient information for efficient information retrieval.

Generally, an implementation of a partial scanning method according to the invention comprises a partial scanning algorithm execution unit, e.g. processor, and a re-scan controller. The re-scan controller will be discussed below.

In this example, the controller for the re-scanning of the files is modelled according to the third partial scanning method described above. The controller is only activated if the size of the allocated buffer is not sufficient for the determined/calculated maximum number of files. The main tasks of the fuzzy logic based re-scan controller are the following:

It sets values for variables (e.g. buffer_low_limit) and formulates the rules to choose the most suitable scanning scheme when the medium, e.g. ODD or USB memory, is loaded into the player or connected to the player. The values may be obtained based on experimental results and then stored. In partial scanning, the controller takes into account the playback mode (e.g. MP3/ JPEG/ SPB/ Idle mode) and playback options (Standard/ Random/ Repeat...) as inputs to decide if background buffering of medium-information can be carried out.

Regarding the question when to perform re-scan, there is no need to perform re-scan for the conventional pre-scanning method; however, re-scan is required for any of the partial scanning methods, if not all the required information in the medium has been detected in the first time scanning.

To give an application example, a user interface of an audio CD player with integrated memory card reader may list seven lines of text. When a user inserts a CD-ROM with MP3 audio data into the CD drive, the player starts the drive and detects that it is a CD-ROM that has been inserted, and that it is formatted in a particular file system, e.g. Universal Disc Format (UDF). Further, the player reads the data structure on the top-level directory, finding that there are e.g. three directories and ten files on this level. It calculates the number of data items on this level being thirteen, and compares it with the number of data items it can buffer simultaneously. Assuming that this number is fifteen, it buffers the data relating to the thirteen data items immediately. If there were e.g. five directories and fifty files on the current level, the decision would be for partial scanning.

In the example, the UI uses data for the first seven data items to generate a display text. When the user scrolls up or down in the menu, remaining at the current directory level, the display is updated with the buffered data. When the user selects one of the subdirectories, the player re-scans the CD, or its TOC respectively, to successively determine the files and directories on the selected subdirectory level, while comparing the number of already detected files with the number of items it can buffer. It may also take into account the length of the text to be displayed, e.g. if it is one or two display lines.

When it has found substantially more MP3 formatted files on that level, a controller as described above determines that no further scanning is useful since the related data cannot be simultaneously buffered nor displayed, and switches to a partial scanning method. As a result, the CD is not further scanned latest when the buffer is full, the current pick-up position is stored to continue scanning later, and the buffered data are sent to the UI for generating the display text. E.g. the text for songs #1-7 are displayed, and data for songs #1-15 are buffered. As described above, in one embodiment of the invention the data from the disc are compressed before buffering and must be decompressed after buffering.

While the user scrolls down the menu in the current directory level and e.g. data for songs #7-13 are displayed, the player detects that the user may continue scrolling up or down, and determines that immediately after the next scrolling step the data for e.g. the songs #1-4 will not be used, and instead data for the songs #14-17 may be used. Thus, while the user reads the display or listens to one of the displayed songs, the player continues to scan the disc in the background, starting at the stored position to retrieve data for these songs. These data are buffered and may replace the data of the songs #1-4. Analogously, when the user scrolls up in the menu and approaches the first buffered title, the controller initiates re-scanning to get the data for the files that may soon be used.
Therefore the data that are required for the next step are always available, without having to scan through the whole content index of the medium.

In a more advanced embodiment, the controller may also analyse which next steps are possible for the user, and retrieve data for a plurality of possible next steps, or all possible next steps. E.g. if the user may alternatively scroll down the menu or select a subdirectory, the controller retrieves data for both options in advance.

In one embodiment of the present invention, the following information is input to the re-scan controller to decide when re-scan should be performed, which works e.g. based on fuzzy logic:
- type of playback
- currently playing Logical Sector Number (LSN)
- end LSN of currently playing file
- current buffer levels
- page of file-list
- currently selected item number on file-list
- page on file-list
- current mode (File-list/Playback/...)

In one embodiment, the following rules are used to determine when re-scan should be performed. Generally, re-scanning of disc information happens when the required structural medium information is not already loaded in the buffer. A few more scenarios exist where re-scanning can occur, e.g. when the current mode is "File-list" with MP3 playback or JPEG picture preview, or when the current mode is "Playback".

For these scenarios, the pick-up manager,will be quite busy with retrieving data for playback, and there is little opportunity to carry out re-scanning. The user might however scroll the file-list or try to skip pictures using special keys (e.g. FWD or forward key) while MP3/JPEG is playing, so that re-scanning for displaying the file-list will be necessary. For this situation, the fuzzy logic controller FLC shown in Fig.2 uses the MP3/JPEG buffer level as an input. The idea is that when the MP3 buffer level is above a safe limit, then the pick-up manager will have time to carry out re-scanning. When the MP3 buffer level drops to a "warning" limit, the fuzzy logic controller FLC directs the pick-up manager to fill the MP3 buffer to a sufficiently safe amount. However, if the user attempts to switch to other folders during MP3 playback, there might be some delay before the contents of the folder will be displayed due to the scanning process during MP3 playback. When using the inventive method for SPB, the buffer for MP3/JPEG must be large enough, in order to prevent that there will be for a short time no audio or no new JPEG displayed because of re-scanning. A safe buffer limit, being high enough to ensure sufficient time for the pickup manager to switch from one task to the other, may be found by testing.

This rule can be formulated like the simple example below:

```
 Rule 1: IF (Input_MP3_Buffer_Level >= Quite_Safe_Level)
   THEN (Scan_Type = Fill_Disc_Info)
 Rule 2: IF (Input_MP3_Buffer_Level <= Warning_Level)
   THEN (Scan_Type = Fill_MP3_Sector)
```

In principle, the invention can be used when a device accesses any storage medium, e.g. a built-in hard disk.

The invention can also be used in cases where the structural information is passed to another, following processing step or unit, and for any reason can be delivered faster by a pick-up than it will be processed by the other processing unit. When the scan selector detects that no more data can be processed, or receives a respective indication signal, it may switch to the partial scanning method so that the scanning can be interrupted and later resumed, preferably at the current position that is stored for this purpose. In this case, there is first the conventional pre-scanning algorithm selected, and upon detecting that the data cannot be processed fast enough, the partial scanning algorithm is selected automatically. The pick-up position may be stored in that moment, and retrieved when partial scanning continues.

## Claims

1. A method for scanning a storage medium, comprising the steps of
- receiving a request for structural information regarding data stored on said storage medium;
- determining at least the type of medium and type of file system on the medium; and
- retrieving from said storage medium structural information indicating the structure and/or type of at least a portion of the data items stored on the medium;
**characterized by** the further steps of
- determining the amount of buffer space that is available for buffering the retrieved information;
- determining a scanning type, wherein the retrieved and the determined information are utilized in combination;
- selecting, depending on the determined scanning type, one of a plurality of scanning methods for scanning the storage medium, wherein at least a first scanning method comprises scanning only a part of the storage medium; and
- scanning the storage medium according to the selected scanning method, wherein structural information is retrieved, and wherein upon selection of the first scanning method the scanning is automatically stopped when structural information for a defined maximum number of data items is retrieved.

2. Method according to claim 1, further comprising the step of buffering the retrieved data, wherein the retrieved data are compressed before buffering and decompressed after retrieval from the buffer.

3. Method according to claim 1 or 2, wherein the defined maximum number of data items to be retrieved from the medium is determined by the maximum number of simultaneously displayable menu items on a user interface, further comprising the step of displaying on said user interface a menu portion using at least a part of the retrieved structural data as menu item data.

4. Method according to claim 2 or 3, wherein scanning the storage medium for structural data is continued in the background of another application, and wherein as much menu item data are retrieved as can immediately be buffered.

5. Method according to any of the preceding claims, wherein said structural information comprises one or more of total medium capacity, used and/or unused medium capacity, number of files and/or directories at least on a current hierarchical level, data types of at least a part of said files, track information associated with said files.

6. Method according to any of the preceding claims, wherein said retrieved and determined information is transformed to fuzzy parameters, and wherein said combining the retrieved and the determined information uses predefined rules for determining a scanning type value and is based on fuzzy logic procedures.

7. Method according to any of the preceding claims, wherein the buffer used for buffering the retrieved data portion is divided into buffer partitions or subbuffers, and wherein the first scanning method comprises the further steps of
- receiving from an application a request for more structural information;
- retrieving upon said request further structural data from the storage medium, wherein the amount of structural information is the amount of data that can be buffered in one of said subbuffers;
- overwriting the buffered data in a defined subbuffer with the further, structural data while leaving the other subbuffers unchanged; and
- updating the application that uses the buffered data.

8. Method according to any of the claims 1-6, wherein after the scanning is automatically stopped the following steps are performed:
- detecting, based on the currently used structural information, which structural information is possible or probable to be used next;
- retrieving from the storage medium said detected structural information to be possible or probable to be used next;
- buffering the retrieved information; and
- selecting upon the next request structural information from said buffered information.

9. Method according to any of the preceding claims, wherein simultaneous playback mode may be selected for one or more particular data types, and wherein upon selection of simultaneous playback mode the retrieving of structural data being track information for any of that particular data types has priority over retrieving of track information of other data types.

10. Device for scanning the contents of a storage medium, using a method disclosed in any of the claims 1-9.

## Patentansprüche

1. Verfahren zum Abtasten eines Speichermediums, umfassend die Schritte:
- Empfangen einer Anforderung nach strukturellen Informationen hinsichtlich von auf dem Speichermedium gespeicherten Daten;
- Bestimmen wenigstens des Typs des Mediums und des Typs des Datensystems auf dem Medium; und
- Wiedergewinnen von strukturellen Informationen von dem Medium, die die Struktur und/oder den Typ wenigstens eines Teils der auf dem Medium gespeicherten Datenworte angeben;
**gekennzeichnet durch** die weiteren Schritte:
- Bestimmen der Menge des zwischenspeicherraums, der zum Speichern der wiedergewonnenen Informationen verfügbar ist;
- Bestimmen eines Abtast-Typs, bei dem die wiedergewonnenen und die bestimmten Informationen in Kombination verwendet werden;
- Auswählen eines von mehreren Abtastverfahren zum Abtasten des Speichermediums in Abhängigkeit von dem bestimmten Abtast-Typ, wobei wenigstens ein erstes Abtastverfahren das Abtasten nur eines Teils des Speichermediums umfasst; und
- Abtasten des Speichermediums gemäß dem ausgewählten Abtastverfahren, bei dem strukturelle Informationen wiedergewonnen werden, und bei dem mit der Auswahl des ersten Abtastverfahrens die Abtastung automatisch angehalten wird, wenn strukturelle Informationen für eine definierte maximale Zahl von Datenworten wiedergewonnen werden.

2. Verfahren nach Anspruch 1, das ferner den Schritt der Zwischenspeicherung der wiedergewonnenen Daten umfasst, bei dem die wiedergewonnenen Daten vor der Zwischenspeicherung komprimiert und nach der Wiedergewinnung aus dem Zwischenspeicher dekomprimiert werden.

3. Verfahren nach Anspruch 1 oder 2, bei dem die definierte maximale Zahl von aus dem Medium wiederzugewinnenden Datenworten durch die maximale Zahl von gleichzeitig anzeigbaren Menü-Elementen auf einer Benutzer-Schnittstelle bestimmt wird, und bei dem ferner der Schritt umfasst wird, auf der Benutzer-Schnittstelle einen Menü-Teil unter Verwendung wenigstens eines Teils der wiedergewonnenen strukturellen Daten als Menü-Element-Daten anzuzeigen.

4. Verfahren nach Anspruch 2 oder 3, bei dem die Abtastung des Speichermediums nach strukturellen Daten im Hintergrund einer weiteren Anwendung fortgesetzt wird, und bei dem soviel Menü-Element-Daten wiedergewonnen werden, wie sofort zwischengespeichert werden können.

5. Verfahren nach einem der vorhergehenden Ansprüche, bei dem die strukturellen Informationen ein oder mehrere der Merkmale umfassen: die Gesamt-Kapazität des Mediums, die benutzte und/oder die nicht benutzte Kapazität des Mediums, die Anzahl von Dateien und/oder Verzeichnissen wenigstens auf einer gegenwärtigen hierarchischen Ebene, Daten-Typen von wenigstens einem Teil der Dateien, den Dateien zugeordnete Spurinformationen.

6. Verfahren nach einem der vorhergehenden Ansprüche, bei dem die wiedergewonnenen und bestimmten Informationen in Fuzzy-Parameter umgewandelt werden, und bei dem das Kombinieren der wiedergewonnenen und bestimmten Informationen vorbestimmte Regeln zur Bestimmung eines Abtast-Typ-Wertes verwendet und auf Fuzzy-Logik-Prozeduren beruht.

7. Verfahren nach einem der vorhergehenden Ansprüche, bei dem der zur Zwischenspeicherung des wiedergewonnenen Datenteils verwendete zwischenspeicher in Zwischenspeicher-Aufteilungen oder Unter-Zwischenspeicher zerlegt wird, und bei dem das erste Abtastverfahren die weiteren Schritte umfasst:
- Empfangen einer Anforderung von mehr strukturellen Informationen von einer Anwendung;
- nach der Anforderung Wiedergewinnen weiterer struktureller Daten von dem Speichermedium, wobei die Menge der strukturellen Informationen gleich der Datenmenge ist, die in einem der Unter-Zwischenspeicher zwischengespeichert werden kann;
- Überschreiben der zwischengespeicherten Daten in einem definierten Unter-Zwischenspeicher mit den weiteren strukturellen Daten, während die anderen Unter-Zwischenspeicher unverändert bleiben; und
- Aktualisieren der Anwendung, die die zwischengespeicherten Daten verwendet.

8. Verfahren nach einem der Ansprüche 1 bis 6, bei dem nach dem automatischen Anhalten der Abtastung die folgenden Schritte ausgeführt werden:
- Feststellen auf der Basis der gegenwärtig verwendeten strukturellen Informationen, welche strukturellen Informationen möglich oder wahrscheinlich als nächste zu benutzen sind;
- Wiedergewinnen der festgestellten strukturellen Informationen, die möglich oder wahrscheinlich als nächste zu benutzen sind, aus dem Speichermedium;
- Zwischenspeichern der wiedergewonnenen Informationen; und
- Wählen struktureller Informationen aus den zwischengespeicherten Informationen nach der nächsten Anforderung.

9. Verfahren nach einem der vorhergehenden Ansprüche, bei dem gleichzeitiger Wiedergabebetrieb für einen oder mehrere bestimmte Daten-Typen ausgewählt werden kann, bei dem bei Auswahl von gleichzeitigem Wiedergabebetrieb die Wiedergewinnung von strukturellen Daten, die Spurinformationen für irgendeinen der bestimmten Daten-Typen sind, Priorität gegenüber der Wiedergewinnung von Spurinformationen von anderen Daten-Typen hat.

10. Vorrichtung zur Abtastung des Inhalts eines Speichermediums unter Verwendung eines in einem der Ansprüche 1 bis 9 offenbarten Verfahrens.

## Revendications

1. Procédé pour balayer un support de stockage, comprenant les étapes de
- réception d'une demande d'informations structurelles relatives aux données stockées sur ledit support de stockage ;
- détermination au moins du type de support et du type de système de fichiers du support ; et
- récupération dudit support de stockage des informations structurelles indiquant la structure et/ou le type d'au moins une partie des éléments de données stockés sur le support ;
**caractérisé par** les étapes supplémentaires de
- détermination de la quantité d'espace de mémoire tampon disponible pour une mise en mémoire tampon des informations récupérées ;
- détermination d'un type de balayage, où les informations extraites et déterminées sont utilisées en combinaison ;
- sélection, selon le type de balayage déterminé, de l'un d'une pluralité de procédés de balayage pour balayer le support de stockage, où au moins un premier procédé de balayage comprend un balayage de seulement une partie du support de stockage ; et
- balayage du support de stockage selon le procédé de balayage sélectionnée, où des informations structurelles sont récupérées, et où après avoir sélectionné le premier procédé de balayage, le balayage est automatiquement interrompu lorsque des informations structurelles d'un nombre maximal défini d'éléments de données sont récupérées.

2. Procédé selon la revendication 1, comprenant en outre l'étape de mise en mémoire tampon des données récupérées, dans lequel les données récupérées sont compressées avant une mise en mémoire tampon et décompressées après une récupération de la mémoire tampon.

3. Procédé selon la revendication 1 ou 2, dans lequel le nombre maximal défini d'éléments de données à récupérer du support est déterminé par le nombre maximal d'éléments de menu affichables simultanément, comprenant en outre l'étape d'affichage sur ladite interface utilisateur d'une partie de menu en utilisant au moins une partie des données structurelles récupérées comme données d'élément de menu.

4. Procédé selon la revendication 2 ou 3, dans lequel un balayage du support de stockage pour des données structurelles continue en arrière-plan d'une autre application, et dans lequel autant de données d'élément de menu qu'il est possible d'en mettre immédiatement en mémoire tampon sont récupérées.

5. Procédé selon une quelconque des revendications précédentes, dans lequel lesdites informations structurelles comprennent un ou plusieurs des éléments suivants : capacité totale du support, capacité utilisée et/ou non utilisée du support, nombre de fichiers et/ou répertoires au moins à un niveau hiérarchique en cours, types de données d'au moins une partie desdits fichiers, informations de pistes associées auxdits fichiers.

6. Procédé selon une quelconque des revendications précédentes, dans lequel lesdites informations récupérées et déterminées sont converties en paramètres flous, et dans lequel ladite combinaison des informations récupérées et déterminées utilise des règles prédéfinies pour déterminer une valeur d'un type de balayage et est basée sur des procédures de logique floue.

7. Procédé selon une quelconque des revendications précédentes, dans lequel la mémoire tampon utilisée pour mettre en mémoire tampon la portion de données récupérées est divisée en partitions de mémoire tampon ou sous-mémoires tampon, et dans lequel le premier procédé de balayage comprend les étapes supplémentaires de
- réception d'une application d'une demande d'informations structurelles supplémentaires ;
- récupération suite à ladite demande des données structurelles supplémentaires du support de stockage, où la quantité d'informations structurelles correspond à la quantité de données qu'il est possible de mettre en mémoire tampon dans l'une desdites sous-mémoires tampon ;
- écrasement des données mises en mémoire tampon dans une sous-mémoire tampon définie par les données structurelles supplémentaires tout en laissant les autres sous-mémoires tampon inchangées ; et
- mise à jour de l'application qui utilise les données mises en mémoire tampon.

8. Procédé selon une quelconque des revendication 1 à 6, dans lequel après que le balayage a été stoppé automatiquement, les étapes suivantes sont effectuées :
- détection, en se basant sur les informations structurelles en cours d'utilisation, des informations structurelles qui seront, de manière possible ou probable, utilisées par la suite ;
- extraction dudit support de stockage desdites informations structurelles détectées qui seront, de manière possible ou probable, utilisées par la suite;
- mise en mémoire tampon des informations récupérées ; et
- sélection, suite à une demande suivante, des informations structurelles desdites informations mises en mémoire tampon.

9. Procédé selon une quelconque des revendications précédentes, dans lequel un mode de lecture simultanée peut être sélectionné pour un ou plusieurs types de données particuliers, et dans lequel, après avoir sélectionné un mode de lecture simultané, la récupération de données structurelles correspondant à des informations de piste pour chacun de ces types de données particuliers est prioritaire sur une récupération d'informations de piste des autres types de données.

10. Dispositif pour balayer le contenu d'un support de stockage en utilisant un procédé présenté dans une quelconque des revendications 1 à 9.
